# EUROPEAN PATENT APPLICATION

(11) **EP 2 933 083 A1**
(43) Date of publication of application: **21.10.2015**
(21) Application number: 15163998.6
(22) Date of filing: 17.04.2015
(51) Int. Cl.: B29C 33/68, B29C 45/00, B29C 45/14, B29C 44/12

(54) **A METHOD FOR PRODUCING A PLASTIC ARTICLE USING A SUPPORT FILM**

(30) Priority: 17.04.2014 DE 102014105496
(71) Applicant: Gealan Formteile GmbH, 95145 Oberkotzau (DE)
(72) Inventor: Von der Grün, Jörg, 95111 Rehau (DE)
(74) Representative: Fleuchaus, Michael A.

(57) **Abstract**

The invention refers to a method for producing a plastic article, wherein a previously formed first member constitutes a base member (24), the base member including a connection surface (30) and made of a first plastic component, and a second member constitutes a body member connected to the base member at the connection surface, the body member including a free surface and made of a second plastic component, said method comprising the steps of: opening a mould (20) having a cavity with a first cavity surface (28) to accommodate the base member (24), and a second cavity surface (27), disposing the base member in contact with the first cavity surface, disposing a support film (1) having first and second support film surfaces (7) with the second support film surface (8) over the second cavity surface (27), closing the mould, whereby the support film and the base member are arranged to form a substantially closed volume between the connection surface and at least part of the first support film surface, injecting the second plastic component in an unset state into the substantially closed volume, cutting the support film so as to cover at least a region of the free surface of the body member, opening the mould to release the article (41) together with the support film (1) attached thereto, wherein the free surface shape of the body member corresponds to the form of at least one region of the first support film surface. The invention further refers to a plastic article formed by the above method.

## Description

The present invention relates to the injection moulding technology. In particular, the present invention relates to the injection moulding of multicomponent plastic articles. More particularly, the present invention relates to methods for manufacturing multicomponent plastic articles comprising at least an elastic plastic component and at least a hard plastic component.

For purposes of this invention disclosure, the term "elastic plastic components" denotes preferably plastic materials with good elasticity, e.g. elastomers comprising polymers such as silicone, polyurethane, polyethylene, polyvinyl chloride, and ethylene-vinyl acetate, rubber, and/or similar materials. The aforementioned polymers may in particular be in an expanded state to increase their elasticity.

Moreover by "hard plastic components" it is meant preferably plastic materials with relatively good resistance to plastic and elastic deformation, e.g. rigid materials comprising polymers such as polyurethane, polyethylene, polypropylene, polyvinyl chloride, nylon, acrylonitrile and/or similar polymers.

Methods for manufacturing plastic articles are known in the prior art. In several known methods a plastic article is obtained by assembling a first element of the plastic article comprising an elastic plastic component, henceforth body element, to a previously manufactured second element of the plastic article comprising a hard plastic component, henceforth base element. This can be achieved by applying the elastic plastic component to the previously formed base element e.g. by means of robotic systems. In particular the body element may be produced with the help of the teaching of WO 00/54959. In other methods, the base element and body element are separately produced and then suitably assembled, e.g. by screwing or gluing.

Such known methods have the drawback that the process producing the base element and the one producing the body element are not integrated, i.e. transporting of the semi-manufactured products adds undesired time delays to the production processes. Moreover the two aforementioned processes are not synchronized, i.e. their timescales may be very different.

Indeed the timescale of the body element production process may be longer than the one of the base element production, in particular when the elastic plastic component is in an expanded state. The base element production may strongly lengthen the duration of the complete manufacturing process and may also require a more complex transport procedure allowing for a sufficient setting of the body element before transport. The latter further affects the downstream processing, the storing, and the packaging of the plastic article.

Other methods integrate the base element and the body element production processes, i.e. they perform the two processes in the same manufacturing device. For instance, according to the method disclosed in EP1510323, a plastic article comprising a body and a base element can be produced by injection moulding in the same mould. The base element is manufactured by injecting the hard plastic component. After cooling, the mould cavity geometry is varied through movable cores to form the cavity defining the body element. The latter one is then obtained by injecting the elastic plastic component.

There are inherent drawbacks in the aforementioned method with regards to synchronization of the processes for producing the base element and the body element due to a much higher time for the setting of the body member material. This leads to substantially the same limitations as in the case of the aforementioned non-integrated methods.

It is an object of the present invention to provide an improved method for manufacturing a multicomponent plastic article, in particular a method that does at least partially overcome the drawbacks of the prior art methods.

This object is solved by a method for producing a multicomponent plastic article according to claim 1. Embodiments of the method of the invention are subject matterofthe dependent claims.

Accordingly, the invention relates to a method for producing a plastic article including a first member, henceforth base member, made of a first plastic component, and a second member, henceforth body member, made of a second plastic component.

For purposes of present invention disclosure the expression "made of" does not imply exclusivity and has to be considered equivalent to the expression "comprising". Therefore a member made of a given plastic component comprises the latter plastic component, possibly together with other materials such as additives (plasticizers, stabilizers, fire retardants and similar), and/or together with other plastic materials to form blends and/or composites.

The base member is connected to the body member at a substantially two-dimensional region, called connection surface in the following. Accordingly, a region of the outer surface of the body member, i.e. of the two-dimensional closed boundary enclosing the three-dimensional volume of the body member, is cooperatively engaged with the connection surface to form the connection between the body and the base member. The remaining region of the body member contour, i.e. the region not involved in this connection with the base member, is called free surface in the following.

In particular, the base member is manufactured in a production step preceding the production step of the body member, thus the method in claim 1 essentially refers to the production of the body member and the connection between the body member and the base member.

This method involves a substantially two-dimensional support film with a first and second surface, and a mould, the mould cavity comprising at least a first and a second cavity surface. In particular the first cavity surface is shaped to accommodate the base member.

Initially, the mould cavity is opened and the base member is disposed in secure contact with the first cavity surface. The second surface of the support film is disposed over the second cavity surface. In particular, the support film does not have to conform to the second cavity surface, although it can be shaped to conform therewith, e.g. by applying a vacuum between the second cavity surface and the second support film surface.

The mould cavity may then be closed, whereby the support film and the base member are arranged to form a substantially closed volume between the connection surface and at least part of the first support film surface. In particular, at least portions of the edges of the connection surface are put in contact to at least a part of the first support film surface.

The second plastic component is injected in an unset state, in particular in a liquid or a foam state, into the closed volume. Before, after, or during the injection procedure the support film is cut so that at least a region of the support film covers at least a region of the free surface of the body member.

Finally the mould is opened and the plastic article is released together with the support film, which is attached to at least the body member and/or the base member. According to this method, the shape of at least a portion of the free surface of the body member corresponds to the form of at least a region of the first support face.

Accordingly, the support film operates as a separator layer and prevents the bonding between the second plastic component and the second cavity surface. Therefore it facilitates the removal of the plastic article from the mould cavity. The support film is cut so as to cover a region of the free surface of the body to facilitate the release of the plastic article together with the support film attached thereto. After the release, the support film is preferably removed from the plastic article, in particular after the setting of the second plastic component. In particular, this will turn the plastic article into its form for its intended use.

In a first embodiment of the invention, the first plastic component and/or the support film may comprise at least a hard plastic component, in particular a rigid material comprising polymers such as polyurethane, polyethylene, polypropylene, polyvinyl chloride, nylon, acrylonitrile and/or combination thereof. Preferably, the support film is made so as to be dimensionally stable after setting, for example, by polymerization or polymer linking, i.e. its shape does substantially not change under any sort of stress it is exposed to under normal working conditions. For example the support film may be able to withstand the internal pressure exerted by the second plastic component during and/or after the injection process, and expansion process, and/or any stress arising during the downstream processing, for example, during storing, or packaging of the plastic article.

The second plastic component may preferably comprise at least an elastic plastic component, in particular an elastomer comprising polymers such as silicone, polyurethane, polyethylene, polyvinyl chloride, ethylene-vinyl acetate, rubber, and/or combinations thereof. In an embodiment of the invention, the elastic plastic component may be in an expanded state, that is, in a foam state

In order to facilitate the removal of the support film from the plastic article, in particular, the body member after setting thereof, the body member and the support film are preferably made of plastic components with bad mutual adhesion properties. For instance if the body member is made of polyurethane and/or polyurethane foam, the support film might preferably made of a polyolefin material such as polyethylene or polypropylene.

As indicated, the second plastic component may be expanded or may be made of a material expanding during or after the injection process and, in particular, it may set in in an expanded state. In particular, expansion may be the result of an exothermic chemical reaction the second plastic component undergoes to assume the foam state, or it may be an expansion process driven by addition of an expansion gas to the second plastic component during injection thereof, such as, for example, carbon dioxide.

In an embodiment, the second cavity surface defines the form of the support film, in particular, if the support film *per se* is not able to withstand the internal pressure exerted by the second plastic component during the injection process. In this embodiment, via the support film that will be forced to fit the second cavity surface driven by, for example, the internal pressure generated by the injection process, the second cavity surface ultimately imparts its shape to the free surface, allowing for an improvement of the manufacturing accuracy of the body member and hence of the plastic article.

In a further embodiment, the mould cavity, and particularly the second cavity surface, may be configured to control the setting process of the second plastic component. In particular, the density and thus also the elasticity of the second plastic component can be modulated. For instance this can be achieved during or after the injection process by varying the temperature of the mould cavity and specifically the second cavity surface.

As indicated before, the correspondence between the free surface and the form of at least one region of the first support film surface can be produced during, shortly after, or shortly before the injection process. For example, it can be achieved by the internal pressure, which the second plastic component exerts on the first support film surface during the injection process and/or afterwards, such as, for example, during an expansion process of the second plastic component. Alternatively, correspondence between the free surface and the form of at least one region of the first support film surface can be produced by deep drawing the support film "into" the second cavity surface, i.e. to closely correspond to the second cavity surface, such as, for example by a vacuum.

In another embodiment, the support film, particularly if dimensionally stable, can counter at least part of the pressure that the second plastic component exerts on the first support film surface during and specifically after the injection process and, thus, can help to impart and/or stabilize the shape of the free surface of the body member, in particular afterthe plastic article has been released from the mould. Moreover, regions of the support film can operate as undercuts, which would otherwise require complex mould mechanics to allow a releasing of the plastic article.

This way, use of a dimensionally stable support film allows for imparting complex geometries to the free surface of the plastic article without increasing the costs and the complexity of both the mould and the manufacturing process.

In an embodiment, correspondence between the free surface shape and the form of at least one region of the first support film surface and/orwith the second mould cavity surface is produced before the injection process, in particular before the insertion of the support film into the mould cavity. For example, this correspondence can be achieved by a forming process, preferably a thermoforming process, being applied to the support film before its disposal over the second mould cavity surface. In this embodiment, the forming process can be performed inside the mould in which the plastic article is produced, or in a separate mould upstream of its disposal in the injection mould. Accordingly, a pre-formed and dimensionally stable support film is then placed over the second cavity surface of the mould, wherein the shape ofthe support film is preferably, however, not necessarily, substantially corresponding to the shape of the second mould cavity surface already before its disposal in the mould.

In an embodiment of the invention, the support film is cut so as to cover substantially the entire free surface of the body member. It can thus be used as a protection mechanism during the downstream processing, the storing, the transport an the packaging of the plastic article, specifically for articles having large free surface areas at many sides of the plastic article. Also, a support film covering substantially the complete free surface of the body member may be used to control the rigidity and/or the plasticity of the second plastic component by modifying the density of the second plastic component by way of defining a confined and dimensionally stable volume, even outside the mould, for example, after the plastic article has been released from the mould. In particular, the density of the second plastic component may also be controlled by varying the amount of time the support film is left in contact with the free surface during the setting process. This may be particularly applicable with support films having activation or additive layers applied thereto, as will be described hereinunder.

In another embodiment of the invention, the support film may be punctured to form an aperture for injection of the second plastic component into the closed volume between the connection surface and the first supporting film surface.

Alternatively, the injection process may be operated without altering the supporting film, thus without jeopardizing its support properties. For instance the support film may be formed, in particular thermoformed to define a channel allowing fluid communication between the substantially closed volume and the outside thereof. In particular, this channel can extend from one edge to the support film to the region covering the free surface and can cooperatively engage with at least part of the base member to form an inlet for the injection of the second plastic component into the closed volume.

In another embodiment, the injection process is done through the base member, without altering either the support film or its features. In particular, the base member is formed to include an aperture for injection of the second plastic component into the substantially closed volume. The base member may also comprise ventilation apertures preventing any overflows of the second plastic component, and also enhancing the filling process and, in particular, equalizing for potential variations in the expansion process.

In an embodiment, the support film operates as a means for carrying, and for applying to the body member once formed by the injection process, substances that help improve, and/or streamline the manufacturing process. For instance an activator layer, in particular an adhesive activator layer, can be applied to the first surface of the support film, preferably to the region of the support film that is in contact with the free surface of the body member. The adhesive activator layer may thus facilitate the downstream manufacturing process by facilitating bonding between the plastic article and other plastic products.

For example, the activator layer may improve the polymerisation (and thus setting) of the second component, i.e. it may speed up setting or, as the case may be, delay it, or it may also improve, or impede expansion of the second component. This may be applicable only to a surface portion of the free surface.

In yet another embodiment, an additive may be applied to at least a portion of the support film, preferably to at least a portion of the first surface of the support film, in particular to apply certain surface properties to the free surface of the body member. In particular, the additive may be a colorant, a lubricant, or the like.

The invention also refers to an elastic plastic article comprising a first member constituting a base member, a second member constituting a body member, and a support film. The base member includes a connection surface and is made of a first plastic component, while the body member includes a free surface and is made of a second plastic component. The support film has first and second surfaces. The body member is connected to the base member at the connection surface, and the support film is removably attached to at least a region of the base member.

The shape of the free surface of the body member corresponds to the form of at least one region of the first support film. In particular, the surface shape of the body member continues to keep the form of the respective portion of the at least one region of the first support film surface also after removal of the support film from the body member and the base member. Thus, the support film acts as a stabilizing element to the shape of the body member also at a time when the second plastic component forming the body member has not or not fully set.

This way, the plastic article can be removed/released from the mould at a time when the second plastic component is not yet self supporting and thus requires additional support by the support film, effectively acting as a shell for the body member and thus protecting its integrity.

In particular, at least afterthe setting of the second plastic component, the support film and base member may be separated from the body member in a non-perturbing way. For the purpose of this invention disclosure, the expression "non-perturbing way" means that removal of the support film afterthe second component has set does substantially not modify the body member's geometric integrity.

Given that the support film, particularly in embodiments where it is dimensionally stable, supports the body member, in particular, before the complete setting of the second plastic component, the support film may also operate as a transport protection mechanism for the plastic article. Moreover, the support film may protect the body member against any stresses arising during downstream processing of the plastic article, its storing, and/or packaging and, in particular, allows for performing any of the aforementioned processes before the complete setting of the second plastic component.

Without the support film any stress exerted on the body member might impart a permanent elastic deformation to the second elastic component and thus permanently damage the geometry or other structural features of the body member.

The use of the support film as transport and support mechanism may bring about several advantages. For instance, the storing, the transport, and the packaging of the plastic article may be streamlined and simplified. For instance, the plastic article can be released from the mould and loaded in a storage box by means of its own weight immediately after the injection of the second plastic component. Furthermore, the plastic article does not have to be set aside until the setting of the second plastic component is completed, thus space needed by the manufacturing process is reduced since the plastic article may already be moved or transported even though the second plastic component und thus the body member is in an unfinished/unset state.

The support film further allows for the manipulation of the plastic article even before the setting of the body member, thus it shortens the duration of the body member production process, and thus allowing to reduce its timescale to be, in the best case, comparable to the timescale of the base member production process. In particular, this allows for the synchronization of the two processes to produce a plurality of substantially identical plastic articles of the invention.

In an embodiment of the invention, the production of at least one, and particularly a plurality of, substantially identical plastic articles of the invention may be achieved by repeatedly applying the procedure described henceforth. This procedure forms the base member by means of standard injection moulding techniques in a first mould cavity, called base mould cavity henceforth, and it produces the body member in a second mould cavity, called body mould cavity henceforth, by using the method and the embodiments of this invention. The injection ofthe second plastic component to form the body member of a given cycle is substantially simultaneous to, that is synchronized with, the injection of the first plastic component to form the base member for the following cycle. Furthermore, the release of the plastic article together with the support film from the body mould cavity may be substantially simultaneous to the release ofthe base member for the following cycle from the base mould cavity. The base of the following cycle is then transported to the body mould cavity, e.g. by means of robotic systems.

The repetitive procedure described above may be integrated in a single manufacturing machine e.g. by accommodating the base and the body mould cavity in the same multi-component mould. In particular, in this embodiment the transport of the base memberfrom the base mould cavity to the body mould cavity may be achieved by using e.g. index rotating plates, rotating plates, linear sliders, or gate valves.

Concerning the support film, the manufacturing process is streamlined if, at a given cycle, the forming process of the support film is substantially simultaneous to the injection of the first plastic component to form the base member of the same cycle. At a given cycle, the transportation of the support film and the transportation ofthe base member in the base mould cavity may be substantially simultaneous as well.

Exemplary embodiments of the invention are described in the following with respect to the attached figures. The figures and corresponding detailed description serve merely to provide a better understanding of the invention and do not constitute a limitation whatsoever of the scope of the invention as defined in the claims. In particular:
- Figure 1: is a schematic cross sectional view of a mould, called thermoforming mould, for use in the thermoforming process of the support film,
- Figure 2: is a schematic cross sectional view of a base mould, i.e. of a mould containing the base mould cavity,
- Figure 3: is a schematic cross sectional view of a body mould, i.e. of a mould containing the body mould cavity,
- Figure 4: is a schematic perspective view of an assembly allowing for the synchronization and the integration of the base member production process and of the body member production processes,
- Figure 5: is a schematic perspective view of a second assembly allowing for the synchronization and the integration of the base member production process and of the body member production processes.

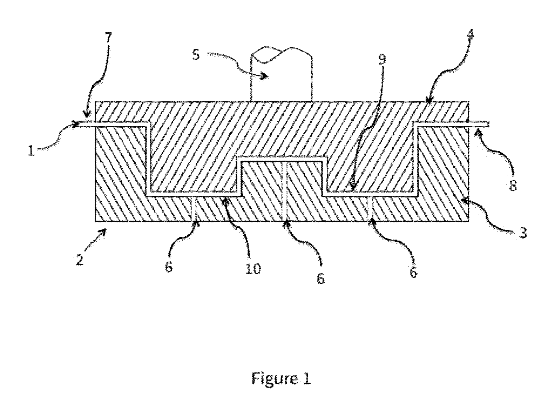

Figure 1 shows a schematic cross sectional view of a thermoforming mould 2 involved in the thermoforming process of a support film 1 as used in the present invention. The thermoforming mould 2 comprises a first thermoforming mould element 4 and a second thermoforming mould element 3. In particular, the second thermoforming mould element 3 is movable with respect to the first thermoforming mould element 4. Specifically, it can be moved from an open position (not shown) to the closed position shown in figure 1 by means of a clamping unit 5.

The support film 1 is unwound, e.g. through index chains (not shown), from a roll (not shown) and extending in a substantially flat state through the cavity of the open thermoforming mould 2. During the unwinding operation, e.g. before reaching the thermoforming mould, cavity, the support film 1 is heated to a pliable temperature. It may also be heated when inside the thermoforming mould. The thermoforming mould 2 is closed to permanently shape the support film 1.

In particular, the first support film surface 7 and the second support film surface 8 conform to the first thermoforming mould surface 9 and to the second thermoforming mould surface 10, respectively. At least a partial vacuum may be formed between the second support film surface 8 and the second thermoforming mould surface 10 through the channels 6, in orderto more efficiently draw the second support film surface 8 onto the second thermoforming mould surface 10.

When the thermoforming mould 2 is opened and the support film 1 is cooled, e.g. through air or water, and released from the thermoforming mould 2, e.g. by means of a stripper plate (not shown), it has assumed a dimensionally stable form. In particular, the partial vacuum between the second support film surface 8 and the second thermoforming mould surface 10 may be broken by injecting airthrough the channels 6. This injection can also facilitate the release of the support film 1.

The support film 1 may then be transported to the body mould 20, e.g. through index chains (not shown).

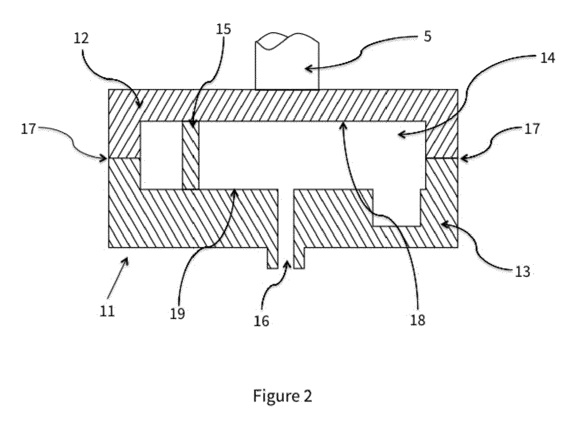

Figure 2 shows a schematic cross sectional view of a base mould 11.The base mould 11 comprises a first 12 and a second 13 base mould element. The second base mould element 13 can be moved with respect to the first base mould element 12 by means of a clamping unit 5. The clamping unit 5 can move the second base mould element 13 onto the first base mould element 12 to close the base mould 11.

The second base mould element 13 may comprise a protrusion 15, such as a substantially cylindrical protrusion 15, substantially extending from the first base mould surface 19 to the second base mould surface 18. Alternatively, the protrusion 15 may be part of the first mould base 12.

The base member 24 is manufactured by closing the base mould 11 and by injecting the first plastic component into the base mould cavity 14. The injection is achieved by means of the base mould injection gate 16 located in the second base mould element 13 in the example shown in Figure 2. Alternatively, the base mould aperture may be located in the first base mould element 12, or at the contact region 17 between the two base mould elements 12, 13.

The presence of the protrusion 15 creates an aperture 31 in the base member 24 when the first component has ben injected into the closed mould and the material set. In an embodiment, the aperture 31 can be used to inject the second plastic component forming the body member in a later step of the procedure. The base mould 11 is then cooled and opened and the base member is released e.g. by means of ejection pins (not shown) located either at the first base mould surface 19 or at the second base mould surface 18.

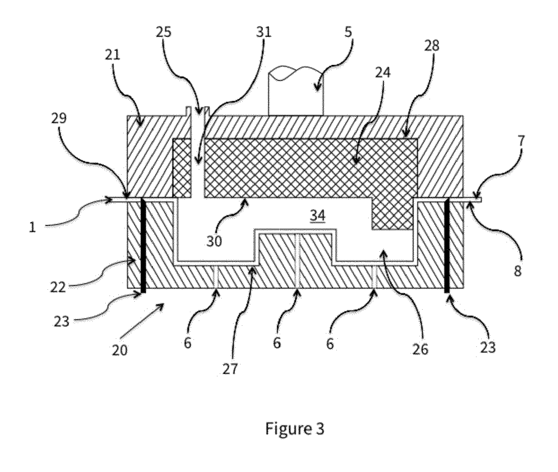

Figure 3 shows a schematic cross sectional view of a body mould 20. The body mould 20 comprises a first 21 and a second 22 body mould element. The first body mould element 21 can be moved with respect to the second body mould element 22 by means of a clamping unit 5. The first body mould element 21 can be moved from an open position (not shown) to the closed position shown in figure 3. Alternatively, the second body mould element 22 can be movable, while the first body mould element 21 is fixed.

The base member 24, for instance the base member 24 produced in the base mould 11 shown in figure 2, is disposed in contact with the first cavity surface 28. The second surface 8 of the support film 1, for instance the support film 1 produced in the thermoforming mould 2 shown in figure 1, is located over the second cavity surface 27. At least a partial vacuum may be formed between the second support film surface 8 and the second mould surface 22 through the channels 6, in order to more efficiently draw the second support film surface 8 onto the second surface 22.

The support film 1 and the base member 24 are arranged to form a substantially closed volume 26 between the first support film surface 7 and the connection surface 30. As may be seen in Figure 3, the side portions of the base member 24 are brought in intimate contact with the first support film surface 7 and, preferably, sealed thereto, for example, by thermal sealing. The substantially closed volume 26 and the base member 24 may be designed to substantially fill the entire volume of the body mould cavity34.

The second plastic component is injected in an unset state into the substantially closed volume 26 to form the body member. In the example depicted in Figure 3, the injection takes place through the body mould gate 25, which is located in the first body mould element 21, and through the aperture 31 of the base member 24, which is located in correspondence to the body mould gate 25. Alternatively, the body mould gate 25 may be located at the second body mould element 22, in correspondence to an aperture of the support film (not shown).

Furthermore, the injection of the second plastic component may be achieved by means of a channel (not shown), which allows fluid communication between the substantially closed volume 26 and the outside thereof. In particular this channel can extend from the edge 29 of the support film 1 to the substantially closed volume 26.

While inside the body mould, the support film 1 is cut so as to substantially cover the free surface of the body member by means of at least a trim device 23, e.g. by means of a trim press or a stamp.

The body mould 20 is then opened and the plastic article is released together with the support film attached thereto.

In an alternative embodiment, the support film 1 may not have undergone a shaping process before being inserted into the body mould 20 but is inserted therein in a substantially flat state and, for example, by heating the body mould 20 appropriately and, at the same time, applying a vacuum though channels 6, drawing the support film 1 into the body mould cavity 34 so as to conduct the forming process inherent with the body formation process (following the support film forming process) as described above.

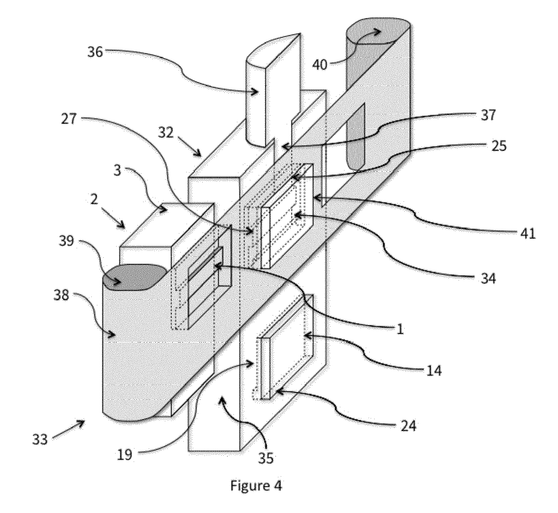

Figure 4 shows a schematic perspective view of an assembly 33 allowing for the synchronization and the integration of the base member production process and of the body member production process. The assembly 33 comprises a thermoforming mould 2, for instance the thermoforming mould shown in figure 1, and a multi-component mould 32.

The thermoforming mould comprises a first thermoforming mould element (not shown) and a second thermoforming mould element 3. In this figure, the thermoforming mould elements are separated, that is the thermoforming mould is open. However, as already shown in figure 1, they can be put in contact by means of a clamp unit (not shown) to close the thermoforming mould 2.

The multi-component mould 32 integrates a base mould and a body mould, e.g. a base mould and a body mould as shown in figures 2 and 3, thus it comprises at least two cavities. The multi-component mould 32 shown in figure 4 is open, thus only a section of the base mould cavity 14 and of the body mould cavity 34 is visible. The multi-component mould 32 comprises a first multi-component mould element 35 and a second multi-component element (not shown). The first multi-component mould element 35 comprises the second cavity surface 27 and the first base mould surface 19.

The second plastic component is contained in a hopper 36 and it is connected to the body mould gate 25 (not shown here) through barrel37. Similarly, but not shown, a hopper may contain the first plastic component which is connected to the base mould gate 16. The injection of the first and of the second plastic component may take place by means of the mechanisms described in conjunction with figures 2 and 3, respectively.

A plurality of support films 1 can be formed, starting from a plastic film material 38, as follows. The plastic film material 38 is wound in a first substantially cylindrical roll 39 which can rotate around a fixed axis. The plastic film 38 is then unwound, e.g. by means of index chains (not shown) extending through the thermoforming mould 2 and it is thermoformed to form a first support film 1, as shown in figure 1.

The plastic film 38 may then be further unwound so as to transport the first support film 1 to the body mould cavity 34. During the manufacturing of the plastic article the first support film 1 is trimmed and is released together with the plastic article and a second support film 1 is thermoformed in the thermoforming mould 2. The remaining portion of the plastic film 38, i.e. the part that remains after the trim of the first support film 1 may, for example, be wound in a second substantially cylindrical roll 40 which can rotate around its fixed axis.

This excess plastic film material can be later processed, e.g., recycled. At the same time the second support film 1 is transported in the body mould cavity 34 and a third support film is thermoformed in the thermoforming mould 2.

This procedure can be repeated *ad libitum,* until the first substantially cylindrical roll 39 is exhausted or the process is stopped or completed.

Figure 4 shows a timeframe of the repetitive procedure leading to the production of at least one, and particularly a plurality of, substantially identical plastic articles, as described above. More precisely, figure 4 shows the opening of the multi-component mould 32 to release the plastic article 41 from the body mould cavity 34 of a given cycle and the release of the base member 24 of the following cycle from the base mould cavity 14.

As already described above, in the repetitive procedure these release operations are substantially simultaneous. The base member 24 is then transported from the base mould cavity 14 to the body mould cavity 34. This may, for example, be achieved by rotating the base member 24, e.g. by means of rotary stripper plates or platens (not shown), or by rotating the second multi-component mould element (not shown). Alternatively, the transport of the base member 24 is achieved by using robotic systems that can translate and/or rotate the base member 24 into the body mould cavity 34.

As already mentioned, at a given cycle the thermoforming process of the support film 1 in the thermoforming mould 2 is substantially simultaneous to the injection of the first plastic component in the base mould cavity 14 of the same cycle. Moreover the support film 1 is transported into the body mould cavity 34 by the unwinding process acting on the first plastic roll 39.

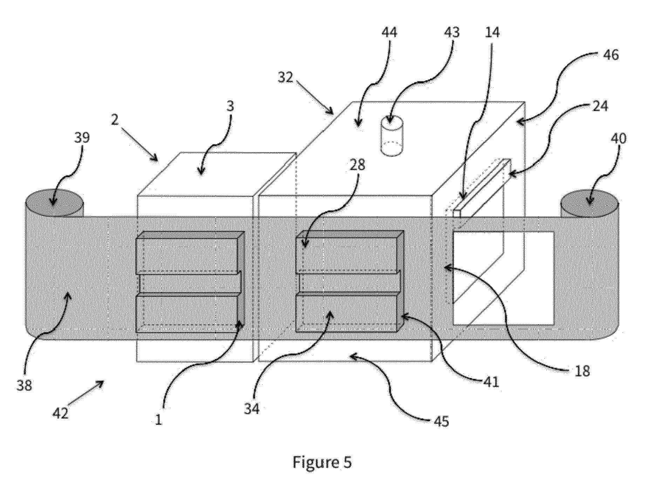

Figure 5 shows a schematic perspective view of a second assembly 42 allowing for the synchronization and the integration of the base member production process and of the body member production process. As will be appreciated, the assembly 42 exhibits features that are similar to the ones of the assembly 33 of figure 4.

The main difference between the two assemblies is the realization of the integration of the base mould and the body mould in the multi-component mould 32. In the case of the assembly 42, the multi-component mould 32 is a turning stack mould with a cube-shaped central section 44, which can rotate around the rotation axis43.

The two faces 45, 46 of the cube-shaped central section 44 and the two faces opposite to them are identical and comprise a face cavity. Depending on the position of the corresponding face, such cavity can operate as a first cavity surface 28, as a second base mould surface 18, or can remain unused. More precisely, the face cavity of the face 45 in correspondence to the plastic film 38 operates as a first cavity surface 28, the face cavity of the face 46 in front of the second substantially cylindrical roll 40 operates as a second base mould surface 18, and the remaining two face cavities remain unused.

Figure 5 shows the same timeframe of the repetitive procedure leadingto the production of at least one, and particularly a plurality of, substantially identical plastic articles as similarly described in figure 4. The only difference between the two embodiments is related to the transport of the base member 24 from the base mould cavity 14 to the body mould cavity 34. In the case of the assembly 42, this is achieved by rotating the cube-shaped central section 44 around the rotation axis 43. In this example, two cavity surfaces do not take part in the manufacturing process for each cycle. However, the assembly 42 can be modified to double the efficiency ofthe repetitive procedure by mirroring the processing of faces 45 and 46 by providing a second plastic film 38 in correspondence to the face opposite to face 45.
- 1: Support film.
- 2: Thermoforming mould.
- 3: Second thermoforming mould element.
- 4: First thermoforming mould element.
- 5: Clamping unit.
- 6: Channels
- 7: First support film surface.
- 8: Second support film surface.
- 9: First thermoforming mould surface.
- 10: Second thermoforming mould surface.
- 11: Base mould.
- 12: First base mould element.
- 13: Second base mould element.
- 14: Base mould cavity.
- 15: Protrusion.
- 16: Base mould gate.
- 17: Contact region between the two base mould elements 12, 13.
- 18: Second base mould surface.
- 19: First base mould surface.
- 20: Body mould.
- 21: First body mould element.
- 22: Second body mould element.
- 23: Trim device.
- 24: Base member.
- 25: Body mould gate.
- 26: Substantially closed volume.
- 27: Second cavitysurface.
- 28: First cavity surface
- 29: Edges of the support film.
- 30: Connection surface.
- 31: Aperture of the base member 24.
- 32: Multi-component mould.
- 33: Assembly
- 34: Body mould cavity.
- 35: First multi-component mould element.
- 36: Hopper
- 37: Barrel
- 38: Plastic film.
- 39: First substantially cylindrical roll.
- 40: Second substantially cylindrical roll.
- 41: Plastic article.
- 42: Assembly.
- 43: Rotation axis.
- 44: Cube-shaped central section.
- 45: First face of the cube-shaped central section.
- 46: Second face of the cube-shaped central section.

## Claims

1. A method for producing a plastic article (41), wherein
a previously formed first member constitutes a base member (24), the base member including a connection surface (30) and made of a first plastic component, and
a second member constitutes a body member connected to the base member at the connection surface (30), the body member including a free surface and made of a second plastic component,
said method comprising the steps of:
a. opening a mould (20) having a cavity with a first cavity surface (28) to accommodate the base member (24), and a second cavity surface (27),
b. disposing the base member (24) in contact with the first cavity surface (28),
c. disposing a support film (1) having first (7) and second (8) support film surfaces with the second support film surface (8) over the second cavity surface (27),
d. closing the mould (20), whereby the support film (1) and the base member (24) are arranged to form a substantially closed volume (26) between the connection surface (30) and at least part of the first support film surface (7),
e. injecting the second plastic component in an unset state into the substantially closed volume (26),
f. cutting the support film (1) so as to coverat least a region of the free surface of the body member,
g. opening the mould (20) to release the article (41) together with the support film (1) attached thereto,
wherein the free surface shape of the body member corresponds to the form of at least one region of the first support film surface (7).

2. The method of claim 1, wherein
the second cavity surface (27) defines the form of the support film (1).

3. The method of any of the preceding claims, wherein
the correspondence between the free surface shape and the form of the at least one region of the first support film surface (7) is produced before step (e), in particular by a forming process being applied to the support film (1), in particular by a thermoforming process.

4. The method of any of the preceding claims, wherein
the correspondence between the free surface shape and the form of the at least one region of the first support film surface (7) is produced during step (e), in particular by an internal pressure which the second plastic component exerts on the first support film surface (7) during or after the injection process, such as, for example, by an expansion process of the second plastic component.

5. The method of any of the preceding claims, wherein
in step (f) the support film (1) is cut so as to cover substantially the entire free surface of the body member.

6. The method of any of the previous claims, wherein
the first plastic component and/or the support film (1) comprise a hard plastic component, in particular a hard plastic component selected from the group consisting of polyurethane, polyethylene, polypropylene, polyvinyl chloride, nylon, acrylonitrile, or a combination thereof.

7. The method of any of the preceding claims, wherein
the second plastic component comprises an elastic plastic component, in particular an elastic plastic material selected from the group consisting of polyurethane, polyethylene, rubber, silicone, polyvinyl chloride, ethylene-vinyl acetate, or a combination thereof.

8. The method of claim 7, wherein
the second plastic component expands during or after injection according to step (e), and, in particular, sets in an expanded state.

9. The method of any of the preceding claims, wherein
the base member (24) comprises an aperture (31) for injection of the second plastic component into the substantially closed volume (26).

10. The method of any of the preceding claims, wherein
the support film (1) is punctured to form an aperture for injection of the second plastic component into the substantially closed volume (26).

11. The method of any of the preceding claims, wherein
the support film (1) is formed to define a channel allowing fluid communication between the substantially closed volume (26) and the outside thereof.

12. The method of any of the preceding claims, wherein
at least an activator layer, in particular an adhesive activator layer, is applied to at least a portion of the first (7) and/orthe second (8) surface of the support film (1).

13. The method of any of the preceding claims, wherein
at least an additive, in particular a colorant, a lubricant, a release agent and/or a setting accelerator, is applied to at least a portion of the support film (1), preferably at least a portion of the first surface (7) of the support film (1).

14. A plastic article (41) comprising:
a first member constituting a base member (24), the base member including a connection surface (30) and made of a first plastic component,
a second member constituting a body member connected to the base member at the connection surface (30), the body member including a free surface and made of a second plastic component, and
a support film (1) having first (7) and second (8) surfaces, the support film removably attached to at least a region of the free surface of the body member and at least a region of the base member (24), wherein
the free surface shape of the body member corresponds to the form of at least one region of the first support film surface (7),
**characterized in that**
the form of the at least one region of the first support film surface (7) remains in correspondence with the respective portion of the surface shape of the body member also after removal of support film (1) from the body member and the base member (24).

15. The plastic article (41) of claim 14, **characterized in that**
the at least one region of the first support film surface (7) corresponds substantially to the complete free surface of the body member.

16. The plastic article (41) of claims 14 or 15, **characterized in that**
the article (41) is produced according to the method of any of claims 1 to 13.
